**Europäisches Patentamt**

**European Patent Office**

**Office européen des brevets**

(19)

(11) Veröffentlichungsnummer: **0 206 012**
A1

# (12) EUROPÄISCHE PATENTANMELDUNG

(21) Anmeldenummer: **86107495.3**

(22) Anmeldetag: **03.06.86**

(51) Int. Cl.⁴: **G 01 F 3/38**

(30) Priorität: **10.06.85 DE 3520748**

(43) Veröffentlichungstag der Anmeldung: **30.12.86**
**Patentblatt 86/52**

(84) Benannte Vertragsstaaten: **AT BE CH FR GB IT LI LU NL SE**

(71) Anmelder: **Feodor Burgmann Dichtungswerke GmbH & Co., Äussere Sauerlacher Strasse 6-8, D-8190 Wolfratshausen 1 (DE)**

(72) Erfinder: **Burg, Stepan, Höllriegelskreuther Weg 9, D-8021 Baierbrunn (DE)**

(74) Vertreter: **Empl, Karl et al, Patentanwälte Dipl.-Ing. K. Empl Dipl.-Ing., Dipl.-Wirtsch.-Ing. K. Fehners Schumannstrasse 2, D-8000 München 80 (DE)**

(54) **Flüssigkeits-Mengenmesser bwz. Durchflussmesser.**

(57) Für explosionsgefährdete Flüssigkeiten oder Aufstellungsorte geeigneter, die drucklos an seinem Zulauf aufgegebene Flüssigkeit auf einem höheren Niveau abgebender Flüssigkeits-Mengenmesser bzw. Durchflußmesser mit einer geschlossenen Meßkammer (5) und einer bei einem oberen Flüssigkeitsspiegel in der Meßkammer ein Signal abgebenden Überwachungseinrichtung (7). In die Meßkammer mündet eine mit dem Zulauf (15) verbundene erste Öffnung (11), sowie eine unter dem oberen Flüssigkeitsspiegel angeordnete zweite Öffnung (12), an welche eine Ablaufleitung (17) angeschlossen ist, deren Mündung (17a) höher als der obere Flüssigkeitsspiegel liegt, und ferner eine dritte Öffnung (13), welche über eine Speiseleitung (19) an eine Druckluftquelle (20) angeschlossen ist. Im Zuge der Speiseleitung (19) und/oder zwischen der ersten Öffnung (11) und dem Zulauf (15) befindet sich eine Ventilanordnung (14), welche bei Erreichung des oberen Flüssigkeitsspiegels im Sinne einer Leerung der Meßkammer umsteuert. Die Überwachungseinrichtung (7) beaufschlagt eine Auswerteeinrichtung, welche aus der Zahl der Meßkammerfüllungen bzw. dem Zeitbedarf dafür die Flüssigkeitsmenge bzw. den Durchfluß ermittelt.

# PATENTANWÄLTE WEDDE , EMPL & FEHNERS

Europäische Patentvertreter · European Patent Attorneys · Mandataires en Brevets Européens

Albert Wedde, Dipl.-Ing.
Karl Empl, Dipl.-Ing.
Klaus Fehners, Dipl.-Ing., Dipl.-Wirtsch.-Ing.

Schumannstr. 2 / Ecke Prinzregentenstraße
D-8000 München 80
Telefon: 089/47 15 47
Telegramme: cosmopat muenchen

Anwaltsakte: P EU 25 332

3. Juni 1985

Feodor Burgmann

Dichtungswerke GmbH & Co.

D-8190  Wolfratshausen  1

Flüssigkeits-Mengenmesser bzw. Durchflußmesser

Die Erfindung betrifft einen Flüssigkeits-Mengenmesser bzw. Durchflußmesser, enthaltend eine allseits geschlossene Meßkammer, eine auf die Flüssigkeitsfüllung in der Meßkammer ansprechende und mindestens bei einem vorgegebenen oberen Füllgrenzwert ein elektrisches oder mechanisches Signal abgebende Überwachungseinrichtung, drei in die Meßkammer einmündende Öffnungen, von denen die erste Öffnung mit einem Zulauf für die zu messende Flüssigkeit verbunden ist, die zweite Öffnung unter dem beim oberen Füllgrenzwert gegebenen oberen Flüssigkeitsspiegel angeordnet und an

-2-

eine durch ihre Mündung die gemessene Flüssigkeit entlassende Ablaufleitung angeschlossen ist und die dritte Öffnung für den Durchtritt von Luft vorgesehen ist, eine mindestens einer der Öffnungen nachgeschaltete, jeweils bei Erreichung des vorgegebenen oberen Flüssigkeitsspiegels umgesteuerte und eine Leerung der Meßkammer bewirkende Ventilanordnung und eine von der Überwachungseinrichtung beaufschlagte Auswerteeinrichtung, welche aus der Zahl der aufeinanderfolgenden Meßkammer-Füllungen eine der durchgelaufenen Flüssigkeitsmenge bzw. aus dem Zeitbedarf für eine oder mehrere Meßkammerfüllungen einen dem Durchfluß entsprechenden Wert ermittelt.

Bei einem derartigen bekannten Durchflußmesser (DE-OS 26 37 681), der vorzugsweise der Überwachung von austretenden menschlichen Körperflüssigkeiten dienen soll, ist die an die zweite Öffnung angeschlossene Ablaufleitung nach unten geführt und die gemessene Flüssigkeit läuft durch deren Mündung frei in einen tiefer als der Durchflußmesser angeordneten Auffangbehälter. Die Ventilanordnung besteht aus einem in dieser Auslaufleitung angeordnetem Elektromagnetventil, das gesteuert von der Überwachungseinrichtung und Auswerteeinrichtung öffnet, wenn die Flüssigkeitsfüllung in der Meßkammer einen oberen Füllgrenzwert erreicht und das schließt, wenn durch den Auslauf der Flüssigkeit die Flüssigkeitsfüllung auf einen unteren Füllgrenzwert gesunken ist. Die dritte Öffnung der Meßkammer dient deren Entlüftung und steht mit der freien Atmosphäre in Verbindung.

In vielen Einsatzfällen, beispielsweise zur Messung oder Überwachung der aus einer Gleitringdichtung austretenden Leckage, ist ein tief gelegener Auffangbehälter für die gemessene Flüssigkeit nicht anwendbar, weil der erforderliche Platz nicht geschaffen werden kann oder weil dann die Flüssigkeit aus dem Auffangbehälter mit erheblichem Aufwand wieder auf ein höheres Niveau gefördert werden müßte. Weiterhin liegen Einsatzfälle vor, bei denen die zu messende Flüssigkeit oder der Aufstellungsort für den Mengen- bzw. Durchflußmesser explosionsgefährdet ist. Bei dem bekannten Gerät ist das Elektromagnetventil mit dem Gerät selbst verbunden, bzw. muß zumindest in seiner die Flüssigkeit führenden Ablaufleitung angeordnet sein. Ist die Flüssigkeit explosionsgefährdet, muß daher ein entsprechend aufwendiges, den einschlägigen Sicherheitsbestimmungen genügendes Elektromagnetventil eingesetzt werden und auch dessen Zuleitung entsprechend ausgebildet sein.

Aufgabe der Erfindung ist es, einen Flüssigkeits-Mengenmesser bzw. Durchflußmesser der eingangs genannten Art so weiterzubilden, daß die zu messende Flüssigkeit auch bei druckloser Zuführung auf einem gegenüber der Zulaufstellung höheren Niveau abgebbar ist und er mit nur geringem Aufwand für höchste Sicherheitsanforderungen auslegbar ist, wenn die zu messende Flüssigkeit bzw. sein Aufstellungsort explosionsgefährdet ist.

Diese Aufgabe wird erfindungsgemäß dadurch gelöst, daß die Mündung der Ablaufleitung auf einem über dem oberen Flüssigkeitsspiegel befindlichen Niveau angeordnet ist, daß an die dritte Öffnung über eine Speiseleitung eine Druckluftquelle angeschlossen ist und daß die Ventilanordnung im Zuge der Speiseleitung liegt und/oder zwischen der ersten Öffnung und dem Zulauf angeordnet ist.

Aufgrund dieser Ausbildung wird ein Elektromagnetventil in der die Flüssigkeit führenden Ablaufleitung entbehrlich, da die periodische Entleerung der Flüssigkeitsfüllungen in der Meßkammer durch deren Beaufschlagung mit einem Luftüberdruck erfolgt. Die Steuerung dieses Luft-Überdrucks kann dabei entweder ausschliesslich mit mechanischen Mitteln erfolgen, die keine Explosionsgefahr erzeugen, beispielsweise durch Rückschlag- oder Strömungsventile, welche ggf. durch einen Schwimmer in der Meßkammer gesteuert werden. Soweit ein Elektromagnetventil in der die Druckluft zuführenden Speiseleitung angeordnet wird, kommt dieses/der mit zu messenden Flüssigkeit nicht in Berührung und kann auch außerhalb eines explosionsgefährdeten Bereiches angeordnet werden. Die auf der Höhe der Flüssigkeitsfüllung in der Meßkammer ansprechende Überwachungseinrichtung kann preisgünstig explosionssicher dadurch ausgebildet werden, daß eine eigensichere Bauart gewählt wird, d. h. daß die Energie in ihrem Stromkreis so gering

-5-

gehalten wird, daß explosionsfähige Gemische nicht gezündet werden können.

Weitere Merkmale und Vorteile der Erfindung gehen aus den Unteransprüchen und der nachfolgenden Beschreibung von Ausführungsbeispielen hervor, welche anhand der Zeichnungen erläutert werden und in denen zeigt:

Fig. 1  einen Schnitt durch eine erste Ausführungsform mit Elektromagnetventil in der Druckluft-Speiseleitung;

Fig. 2  einen Schnitt durch eine zweite Ausführungsform ohne Elektromagnetventil und

Fig. 3  eine Modifikation der zweiten Ausführungsform.

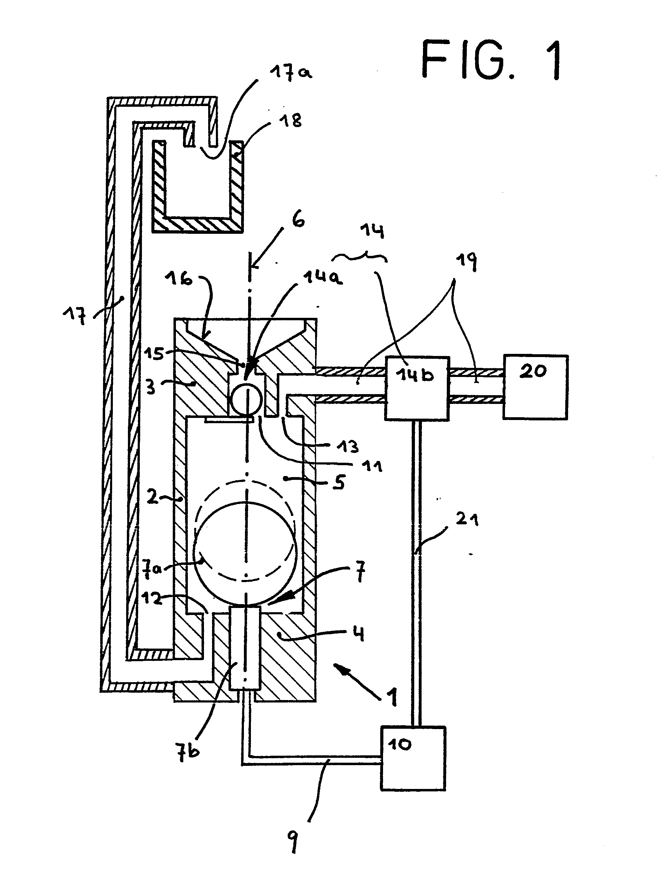

Die in Fig. 1 veranschaulichte erste Ausführungsform enthält einen in seiner Gesamtheit mit 1 bezeichneten Körper, bestehend aus einer hohlzylindrischen Seitenwand 2, einem Deckelteil 3 und einem Bodenteil 4, welche eine zylindrische Meßkammer 5 mit vertikaler Achse 6 umschliessen, in der beweglich ein Schwimmer 7a angeordnet ist, der aus ferromagnetischem Ma-terial, beispielsweise Eisenblech besteht oder entsprechendes Material enthält. In einer in der Längsachse 6 gelegenen Bohrung des Bodenteils 4 ist ein von einem induktiven Näherungsschalter gebildeter Sensor 7b angeordnet. Dieser bildet zusammen mit dem Schwimmer 7a eine Überwachungseinrichtung 7, welche bei einem vorgegebenen Abstand des Schwimmers 7a (vgl. die gestrichelte Lage) zum Sensor 7b, die einem bestimmten oberen Füllgrenzwert der Flüssigkeit in der Meßkammer 5 entspricht, ein elektrisches Signal über eine Leitung 9 an eine Auswerteinrichtung 10 abgibt.

In die Meßkammer 5 münden insgesamt drei Öffnungen 11-13. Die erste Öffnung 11 befindet sich im Deckelteil 3 im Bereich der vertikalen Längsachse 6und steht über ein in seiner Gesamtheit mit 14a bezeichnetes Rückschlagventil mit einem Zulauf 15 in Verbindung, der sich nach oben in eine trichterförmige Auffangschale 16 erweitert, welche die zu messende Flüssigkeit aufnimmt und auch ein gewisses Quantum dieser Flüssigkeit während der später noch erläuterten Entleerungsphase der Meßkammer 5 speichern kann.

Die zweite Öffnung ist im Bodenteil 4 ausgebildet und an eine Ablaufleitung 17 angeschlossen, welche nach oben geführt ist, so daß sich ihre Mündung 17 a, unterhalb der sich ein Auffangbehälter 18 für die gemessene Flüssigkeit befindet, höher als der obere Flüssigkeitsspiegel in der Meßkammer 5 befindet, wie er durch den oberen Füllgrenzwert vorgegeben ist, bei welchem die Überwachungseinrichtung 7 ein Signal abgibt.

Die dritte Öffnung 13 ist über eine Speiseleitung 19 mit einer Druckluftquelle 20 verbunden. In dieser Speiseleitung 19 ist ein

-7-

Elektromagnetventil 14 b angeordnet, dessen Steuerleitung 21 zur Auswerteinrichtung 10 führt. Beaufschlagt die Auswerteinrichtung 10 die Steuerleitung 21 mit elektrischer Spannung, öffnet das Elektromagnetventil 14 b und durch die dritte Öffnung 13 strömt Druckluft in die Meßkammer 5.

Beim Betrieb gelangt die zu messende Flüssigkeit über die Auffangschale 16, den Zulauf 15 und das Rückschlagventil 14 a in die Meßkammer 5, wobei die darin enthaltene Luft umgekehrt über den gleichen Weg verdrängt wird und das Rückschlagventil wegen der geringen Strömungsgeschwindigkeit noch nicht zum Ansprechen kommt. Hierbei hebt sich der Flüssigkeitsspiegel in der Meßkammer 5 und der Schwimmer wird nach oben bewegt, bis bei einem vorgegebenen Füllgrenzwert der Sensor 7b anspricht, worauf die Auswerteinrichtung 10 das Elektromagnetventil 14 b betätigt. Abhängig von der Ausbildung der Auswerteinrichtung 10 kann diese Betätigung entweder für eine vorgegebene (relativ kurze) Zeitdauer erfolgen, oder so lange, bis der Sensor 7b ein einem vorgegebenen unteren Füllgrenzwert für die Meßkammer 5 entsprechendes anderes Signal über die Leitung 9 an die Auswerteinrichtung 10 abgibt. Durch Öffnung des Elektromagnetventils 14b wird der Luftdruck über dem Flüssigkeitsspiegel der Meßkammer 5 erhöht, wodurch Luft durch das Rückschlagventil 14a in Richtung zur Auffangschale 16 strömt, was zu einer Schliessung dieses Rückschlagventils führt. Hierdurch erhöht sich der Luftdruck weiter, wodurch die Flüssigkeitsfüllung über die Ablaufleitung 17 in den Auffangbehälter 18 verdrängt bzw. aus-

-8-

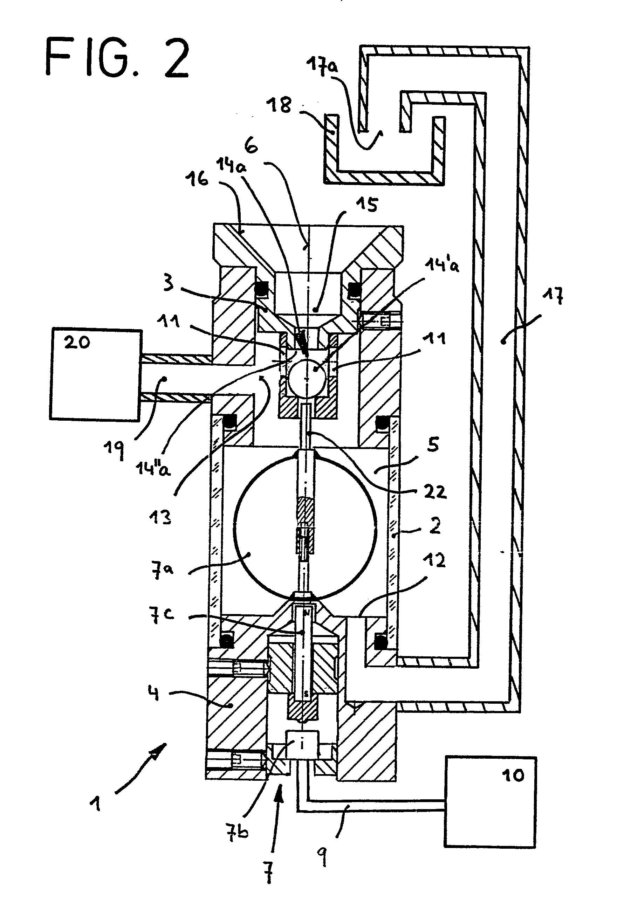

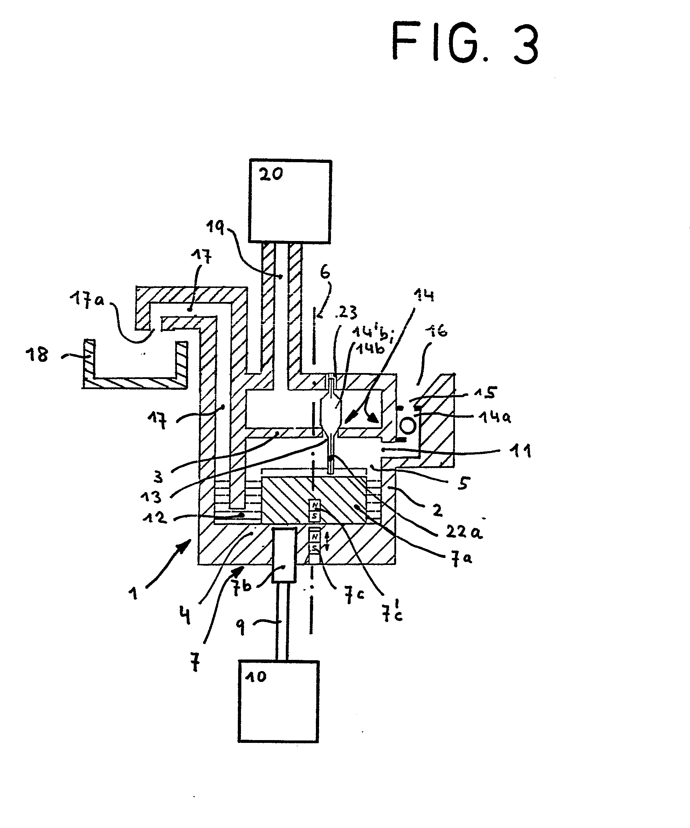

geblasen wird. Nach Schliessung des Elektromagnetventils 14b kann die nunmehr leere Ablaufleitung einen Druck-ausgleich zwischen der Meßkammer und der freien Atmosphäre herstellen, sodaß in der Meßkammer der Druck absinkt und das Rückschlagventil wieder in seine Offenstellung zurückkehrt und die Meßkammer 5 wiederum die zu messende Flüssigkeit (einschl. der sich während der Entleerungsphase in der Auffangschale 16 angesammelten Flüssigkeit) aufnimmt. In der Fig. 2, welche die zweite Ausführungsform veranschaulicht, sind gleichwirkende, bzw. gleichgestaltete Bauteile mit übereinstimmenden Bezugszeichen versehen (gilt auch für die Variante gem. Fig. 3) und es wird zu deren Erläuterung auf die obige Beschreibung verwiesen.

Die zweite Ausführungsform kommt ohne ein Elektromagnetventil aus, d. h. die Druckluftquelle 20 ist unmittelbar mit der dritten Öffnung 13 der Meßkammer 5 durch die Leitung 19 verbunden. In diese ist jedoch ein Drosselventil oder ein Strömungsbegrenzungsventil einzubauen, falls der Druck bzw. die Liefermenge der Druckluftquelle 20 für die Zwecke der Erfindung zu groß ist. Zwischen dem Sensor 7b, beispielsweise einem Induktivkontakt, und dem Schwimmer 7a, welche wiederum eine Überwachungseinrichtung 7 bilden, ist ein sich          mit seiner Achse in der Längsachse 6 erstreckender Stabmagnet 7c angeordnet, der, wie auch der Sensor 7b in Richtung der Längsachse zu Justierzwecken verschieblich, aber betriebsmäßig festgelegt ist. Der Stabmagnet 7c bewirkt einen Sprungeffekt, d. h. durch seine magnetische Kraftwirkung wird bei sich füllender Meßkammer 5 der Schwimmer 7a anfänglich gegen die durch die steigende Flüssigkeit bewirkte Auftriebskraft in seiner unteren Lage solange festgehalten, bis bei einem oberen Füllgrenzwert die Auftriebskraft die Magnetkraft übersteigt und der Schwimmer sprunghaft in eine obere Grenzlage übergeht. Die dabei bewirkte Änderung der magnetischen Verhältnisse führt zu einem Signal des Sensors 7b.

Vom Schwimmer 7a steht nach oben in der Längsachse 6 ein Zapfen 22 vor. Dieser kommt in der oberen Position des Schwimmers 7a zur Anlage an der Unterseite eines kugelförmigen Ventilkörpers 14'a des Rückschlag- oder Strömungsventils 14a und drückt diesen gegen eine darüber befindliche Ventilsitzfläche 14''a.

Im Betrieb gelangt die zu messende Flüssigkeit über die Auffangschale 16, den Zulauf 15 und das Ventil 14a in die Meßkammer 5. Im Gegenzug dazu bewegt sich auf dem gleichen Wege die von der Flüssigkeit aus der Meßkammer verdrängte Luft, sowie die von der Druckluftquelle über die Leitung 19 und die dritte Öffnung 13 in die Meßkammer 5 eingeführte Druckluft. Bei einem oberen Füllgrenzwert überwiegt der Auftrieb des Schwimmers 7a die Magnetkraft des Stabmagneten 7c, der Schwimmer geht ruckartig nach oben und bringt mittels eines Zapfens 22 den Ventilkörper 14'a in Schließstellung. Da die Druckluft nicht mehr über das Ventil 14a entweichen kann, baut sich über dem Flüssigkeitsspiegel in der Meßkammer 5 ein zunehmender Druck auf, der dazu führt, daß die darin enthaltene Flüssigkeit über die Ablaufleitung 17 in den Auffangbehälter 18 verdrängt wird. Während dieses Vorganges bleibt das Ventil 14a ständig geschlossen und zwar weil einerseits der erhöhte Druck in der Meßkammer den Ventilkörper 14'a an seinem Ventilsitz 14''a hält und weil andererseits der Schwimmer 7a wegen des Stabmagneten 7c ursprünglich bei der Füllung der Meßkammer nicht frei seinen Auftriebskräften folgen konnte und nunmehr auch beim Absenken des Flüssigkeitsspiegels einer Hysterese unterworfen ist.

Ist jedoch die Meßkammer (und die Ablaufleitung 17) durch die Druckluft völlig von der Flüssigkeit befreit, nimmt einerseits der Schwimmer 7a wieder seine untere Position ein und wird in dieser auch vom Stabmagneten 7c gehalten, während andererseits die Druckluft über die Ablaufleitung 17 entweichen kann, so daß der Luftdruck in der Meßkammer 5 stark reduziert wird. Dadurch kann der Ventilkörper 14'a wieder in seine Offenstellung zurückkehren, wodurch die zu messende Flüssigkeit wieder in die Meßkammer 5 eindringen und im Gegenzug Luft aus dieser durch das Ventil 14a entweichen kann, wodurch ein neuer Meßzyklus in Gang gesetzt wird.

Bei der in Fig. 3 veranschaulichten Modifikation ist wiederum eine Auffangschale 16 über einen Zulauf 15 und ein Rückschlag- bzw. Strömungsventil 14a mit einer in eine Meßkammer einmündenden ersten Öffnung 11 verbunden. Dieses Ventil 14a öffnet bei einer Strömung in der angegebenen Richtung und schließt bei einer in umgekehrter Richtung verlaufenden Luftströmung vorgegebener Größe, dergestalt, daß die von der zu messenden Flüssigkeit aus der Meßkammer 5 verdrängte Luft entweichen kann, bei einer Beaufschlagung der Meßkammer mit Druckluft aber eine Sperrung durch das Ventil 14a eintritt. Die von der Druckluftquelle 20 kommende Speiseleitung 19 ist über ein umschaltbares, in seiner Gesamtheit mit 14b bezeichnetes Ventil mit der dritten Öffnung 13 der Meßkammer 5 verbunden. Dieses Umschaltventil enthält einen Ventilkörper 14'b, der oberhalb des Schwimmers 7a angeordnet ist und einen zu diesen nach unten vorstehenden, sich parallel zur Längsachse der Meßkammer 5 erstreckenden Zapfen 22a trägt. In seiner einen unteren Stellung versperrt der Ventilkörper 14'b der über die Speiseleitung 19 herangeführten Druckluft den Weg zur Meßkammer 5, eröffnet aber andererseits der Druckluft einen Weg zu einer mit der freien Atmosphäre in Verbindung stehenden Auslaßöffnung 23. Wird mit zunehmender Füllung der Meßkammer 5 nach Überwindung der magnetischen Kraft zwischen dem am Körper 1 festen Stabmagneten 7c und einem am Schwimmer 7a angeordneten weiteren Stabmagneten 7'c dieser Schwimmer von der Flüssigkeit angehoben, drückt er mittels des Zapfens 22a den Ventilkörper 14'b nach oben, sodaß der Zugang zur Auslassöffnung 23 verschlossen und ein Weg für die Druckluft zur dritten Öffnung 13 der Meßkammer eröffnet wird. Hierdurch nimmt der Luftdruck in der Meßkammer zu, das Ventil 14a schließt sich, was wiederum mit einer Drucksteigerung verbunden ist, die zu einer Entleerung der Meßkammer durch die Ablaufleitung 17 in den Auffangbehälter 18 führt, wobei sich der Schwimmer 7a senkt, der Ventilkörper wiederum den Zugang zur dritten Öffnung 13 schließt, so daß über die Ablaufleitung 17 ein Druckausgleich zur Atmosphäre eintritt, das Ventil 14a wieder öffnet und die zu messende Flüssigkeit in die Meßkammer für einen weiteren Meßzyklus eintreten kann. Wie in den vorstehenden Ausführungsbeispielen wird die Bewegung des Schwimmers 7a von einer Überwachungseinrichtung 7 mit einem Sensor 7b überwacht und einer Auswerteinrichtung 10 gemeldet, welche daraus einen der durchgeflossenen Flüssigkeitsmenge bzw. einen den Durchfluß entsprechenden Wert ermittelt.

**PATENTANWÄLTE**
Dipl.-Ing. K. EMPL
Dipl.-Ing., Dipl.-Wirtsch.-Ing. K. FEHNERS
Schumannstraße 2
D-8000 München 80

3. Juni 1986

-/1-

Anwaltsakte: P EU 25 332

P A T E N T A N S P R Ü C H E

1. Flüssigkeits-Mengenmesser bzw. Durchflußmesser, enthaltend eine allseits geschlossene Meßkammer, eine auf die Flüssigkeitsfüllung in der Meßkammer ansprechende und mindestens bei einem vorgegebenen oberen Füllgrenzwert ein elektrisches oder mechanisches Signal abgebende Überwachungseinrichtung, drei in die Meßkammer einmündende Öffnungen, von denen die erste Öffnung mit einem Zulauf für die zu messende Flüssigkeit verbunden ist, die zweite Öffnung unter dem beim oberen Füllgrenzwert gegebenen oberen Flüssigkeitsspiegel angeordnet und an eine durch ihre Mündung die gemessene Flüssigkeit entlassende Ablaufleitung angeschlossen ist und die dritte Öffnung für den Durchtritt von Luft vorgesehen ist, eine mindestens einer der Öffnungen nachgeschaltete, jeweils bei Erreichung des vorgegebenen oberen Flüssigkeitsspiegels umgesteuererte und eine Leerung der Meßkammer bewirkende Ventilanordnung und eine von der Überwachungseinrichtung beaufschlagte Auswerteeinrichtung, welche aus der Zahl der aufeinanderfolgenden Meßkammerfüllungen einen der durchgelaufenen Flüssigkeitsmenge bzw. aus dem Zeitbedarf für eine oder mehrere Meßkammerfüllungen einen dem Durchfluß entsprechenden Wert ermittelt, d a d u r c h   g e k e n n z e i c h n e t, daß die Mündung (17a) der

-II-

- 2 -

Ablaufleitung (17) auf einem über dem oberen Flüssigkeitsspiegel befindlichen Niveau angeordnet ist, daß an die dritte Öffnung (13) über eine Speiseleitung (19) eine Druckluftquelle (20) angeschlossen ist und daß die Ventilanordnung (14) im Zuge der Speiseleitung (19) liegt und/oder zwischen der ersten Öffnungen (11) und dem Zulauf (15) angeordnet ist.

2. Flüssigkeits-Mengenmesser bzw. Durchflußmesser nach Anspruch 1, d a d u r c h   g e k e n n z e i c h n e t, daß die Überwachungseinrichtung (7) einen in der Meßkammer (5) angeordneten Schwimmer (7a) und einen mindestens in einer dem oberen Füllgrenzwert entsprechenden Endlage des Schwimmers (7a) ansprechenden Sensor (7b) umfaßt.

3. Flüssigkeits-Mengenmesser bzw. Durchflußmesser nach Anspruch 2, d a d u r c h   g e k e n n z e i c h n e t, daß der Schwimmer (7a) ganz oder teilweise aus ferromagnetischem Material besteht und daß der Sensor (7b) ein im wesentlichen in der Längsachse (6) der Meßkammer (5) angeordneter induktiver oder magnetischer Näherungsmelder oder -schalter ist.

- 3 -

4. Flüssigkeits-Mengenmesser bzw. Durchflußmesser nach Anspruch 2 oder 3, d a d u r c h   g e k e n n z e i c h - n e t, daß der Sensor (7b) in Richtung der Längsachse (6) justierbar ist.

5. Flüssigkeits-Mengenmesser bzw. Durchflußmesser nach Anspruch 1, d a d u r c h   g e k e n n z e i c h n e t, daß die Überwachungseinrichtung (7) eine auf den statischen Druck der Flüssigkeitssäule in der Meßkammer (5) ansprechende, signalgebender Druckmesseinrichtung enthält.

6. Flüssigkeits-Mengenmesser bzw. Durchflußmesser nach einem der Ansprüche 1-5, d a d u r c h   g e k e n n - z e i c h n e t, daß die Überwachungseinrichtung (7) eine mindestens bei Erreichung des oberen Füllgrenzwerts in der Meßkammer (5) das von ihr abgegebene Signal sprunghaft ändernde Anordnung enthält.

7. Flüssigkeits-Mengenmesser bzw. Durchflußmesser nach Anspruch 6, d a d u r c h   g e k e n n z e i c h n e t, daß die Anordnung ein erstes, aus einem Permanent-Magnetsystem bestehendes Glied (7c) und ein relativ dazu bewegliches, aus einem ferromagnetischen Material oder einem Permanent-Magneten (7'c) bestehendes zweites Glied enthält und daß das eine Glied an einem die Meßkammer bildenden Bauteil und das andere Glied an einem Schwimmer (7a) befestigt ist.

-IV-

- 4 -

8.  Flüssigkeits-Mengenmesser bzw. Durchflußmesser nach Anspruch 1, d a d u r c h   g e k e n n z e i c h n e t, daß die Ventilanordnung (14) zwei Ventile (14a, 14b) enthält, wobei das zwischen der ersten Öffnung (11) und dem Flüssigkeitszulauf (15) angeordnete Ventil (14a) als Rückschlagventil ausgebildet ist und das in der Speiseleitung (19) eingebaute Ventil (14b) ein Elektromagnetventil ist, das die Auswerteeinrichtung (10) jeweils bei Erreichung des oberen Füllgrenzwertes in Offenstellung steuert.

9.  Flüssigkeits-Mengenmesser bzw. Durchflußmesser nach Anspruch 1, d a d u r c h   g e k e n n z e i c h n e t, daß die Ventilanordnung (14) zwei Ventile (14a, 14b) enthält, wobei das zwischen der ersten Öffnung (11) und dem Flüssigkeitszulauf (15) angeordnete Ventil (14a) als Rückschlagventil ausgebildet ist und das in die Speiseleitung (19) eingebaute Ventil (14b) ein Umschaltventil ist, dessen Ventilkörper (14'b) über ein Koppelglied (22a) mit einem in der Meßkammer (5) angeordneten Schwimmer (7a) mechanisch verbunden ist und in einer dem oberen Füllgrenzwert entsprechenden oberen Stellung des Schwimmers die Druckluftquelle (20) mit der Meßkammer (5) und in einer tieferen Stellung des Schwimmers die Druckluftquelle mit einer zur freien Atmosphäre führenden Auslaßöffnung (23) verbindet und daß zwischen der Druckluft-

-5-

quelle (20) und der dritten Einlaßöffnung kein vom Flüssigkeitsstand in der Meßkammer (5) abhängig gesteuertes Ventil angeordnet ist.

10. Flüssigkeits-Mengenmesser bzw. Durchflußmesser nach Anspruch 1, d a d u r c h  g e k e n n z e i c h n e t, daß die Ventilanordnung (14) ein Ventil (14a) enthält, das zwischen der ersten Öffnung (11) und dem Flüssigkeitszulauf (15) angeordnet ist und als Rückschlagventil ausgebildet ist, dessen Ventilkörper (14'a) zusätzlich über ein Koppelglied (22) mechanisch antreibbar ist und daß ein in der Meßkammer (5) angeordneter Schwimmer (7a) bei steigender Flüssigkeitsfüllung das Koppelglied (22) und den Ventilkörper (14'a) im Schließsinne antreibt.

11. Flüssigkeits-Mengenmesser bzw. Durchflußmesser nach Anspruch 2 oder 3 oder 6 und Anspruch 9 oder 10, d a d u r c h  g e k e n n z e i c h n e t, daß für die Überwachungseinrichtung (7) und für die Betätigung des Koppelgliedes (22, 22a) ein gemeinsamer Schwimmer (7a) vorgesehen ist.

-VI-

12. Flüssigkeitsmengenmesser bzw. Durchflußmesser nach Anspruch 8 oder 9, d a d u r c h   g e k e n n z e i c h - n e t, daß das zwischen dem Zulauf (15) und der ersten Öffnung (11) angeordnete Rückschlagventil (14a) als Strömungsventil ausgebildet ist, das von einer einen vorgegebenen Minimalwert übersteigenden Strömung von der ersten Öffnung (11) zum Zulauf(15) in Schließstellung bringbar ist.

# FIG. 1

FIG. 2

0206012

2/3

# FIG. 3

Europäisches
Patentamt

**EUROPÄISCHER RECHERCHENBERICHT**

Nummer der Anmeldung

EP 86107495.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | <u>DE - A1 - 2 637 658</u> (THEDIECK)<br>* Patentansprüche 1-5;<br>Fig.1,3 *<br>-- | 1,2,5,6 | G 01 F 3/38 |
| A | <u>US - A - 3 040 576</u> (VOGEL)<br>* Fig.1,2; Spalte 1, Zeile 63 -<br>Spalte 3, Zeile 47 *<br>---- | 1,2,5,6 | |

|  |
|---|
| RECHERCHIERTE SACHGEBIETE (Int. Cl.4) |
| G 01 F 3/00 |

Der vorliegende Recherchenbericht wurde für alle Patentansprüche erstellt.

| Recherchenort | Abschlußdatum der Recherche | Prüfer |
|---|---|---|
| WIEN | 08-09-1986 | BURGHARDT |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82